Europäisches Patentamt

**European Patent Office**

Office européen des brevets

(19)

(11) Numéro de publication: **0 232 212**
A1

(12)

# DEMANDE DE BREVET EUROPEEN

(21) Numéro de dépôt: **87440001.3**

(22) Date de dépôt: **14.01.87**

(51) Int. Cl.³: **H 02 G 3/04**

(30) Priorité: **15.01.86 FR 8600813**

(43) Date de publication de la demande:
**12.08.87 Bulletin 87/33**

(84) Etats contractants désignés:
**AT CH DE GB IT LI SE**

(71) Demandeur: **CONCEPTAL, Sàrl**
**30, route de Paris**
**F-67117 Ittenheim(FR)**

(72) Inventeur: **Ramstein, Roland**
**30 Route de Paris**
**F-67117 Ittenheim(FR)**

(74) Mandataire: **Nuss, Pierre**
**10, rue Jacques Kablé**
**F-67000 Strasbourg(FR)**

(54) **Goulotte de distribution universelle.**

(57) La présente invention concerne une goulotte de distribution.

Goulotte caractérisée en ce qu'elle est universelle, et en ce qu'elle est essentiellement constituée par un élément profilé extrudé (1) à section en H, dont les extrémités des ailes sont pourvues de moyens (2) de fixation par encliquetage de couvercles (3) de faces et de couvercles interchangeables à section évolutive de forme et section quelconques (4) de côtés, dont l'âme (5) est munie sur ses deux faces de crans longitudinaux (6) de fixation ou d'accrochage d'éléments de séparation, de suspension, ou autres, et dont chaque aile est pourvue extérieurement, au niveau de l'âme (5), de crans longitudinaux (7) de fixation ou d'accrochage d'éléments de séparation ou pour la fixation de dispositifs en saillie sur les côtés de la goulotte.

Fig.1

EP 0 232 212 A1

Goulotte de distribution universelle

La présente invention concerne le domaine de la distribution électrique et/ou d'autres circuits informatiques et téléphoniques, en particulier dans des locaux de bureaux et commerciaux, et a pour objet une goulotte de distribution universelle.

Actuellement, la distribution électrique et d'autres circuits informatiques et téléphoniques dans des locaux de bureaux et commerciaux est généralement réalisée au moyen de goulottes ou de plinthes en aluminium à fixer le long des parois desdits locaux et présentant des cloisons de séparation amovibles ou fixes.

Il existe également des colonnes permettant une distribution à des appareillages sur une ou deux faces et dont l'accès est possible au moyen de couvercles correspondants. Ces colonnes connues sont généralement compartimentées en deux, chaque compartiment pouvant être subdivisé au moyen de parois longitudinales amovibles afin de réaliser, par exemple, une séparation des différents circuits et, ainsi, une meilleure reconnaissance de ces circuits.

Ces colonnes de distribution connues ne sont, cependant, pas adaptables à une utilisation de support en position horizontale ou de poteau de paroi en position verticale, et ne permettent aucune extension de capacité.

La présente invention a pour but de pallier ces inconvénients.

Elle a, en effet, pour objet une goulotte de distribution caractérisée en ce qu'elle est universelle, et en ce qu'elle est essentiellement constituée par un élément profilé extrudé à section en H, dont les extrémités des ailes sont pourvues de moyens de fixation par encliquetage de couvercles de faces et de couvercles interchangeables à section évolutive de forme et section quelconques de côtés, dont l'âme est munie sur ses deux faces de crans longitudinaux de fixation ou d'accrochage d'éléments de séparation, de suspension, ou autres, et dont chaque aile est pourvue extérieurement, au niveau de l'âme, de crans longitudinaux de fixation ou d'accrochage d'éléments de séparation ou pour la fixation de dispositifs en saillie sur les côtés de la goulotte.

L'invention sera mieux comprise grâce à la description ci-après, qui se rapporte à un mode de réalisation préféré, donné à titre d'exemple non limitatif, et expliqué avec référence aux dessins schématiques annexés, dans lesquels :

la figure 1 est une vue en coupe d'une goulotte conforme à l'invention ;

la figure 2 est une vue partielle en perspective et en coupe de la goulotte en position d'utilisation à l'horizontale ;

la figure 3 est une vue analogue à celle de la figure 2 représentant la goulotte en position verticale ;

les figures 4 et 5 sont des vues en coupe représentant la goulotte, respectivement sous forme d'un élément de support de plafond suspendu et sous forme d'un poteau de paroi, et

la figure 6 est une vue analogue à celle de la figure 1 d'une variante de réalisation de l'invention.

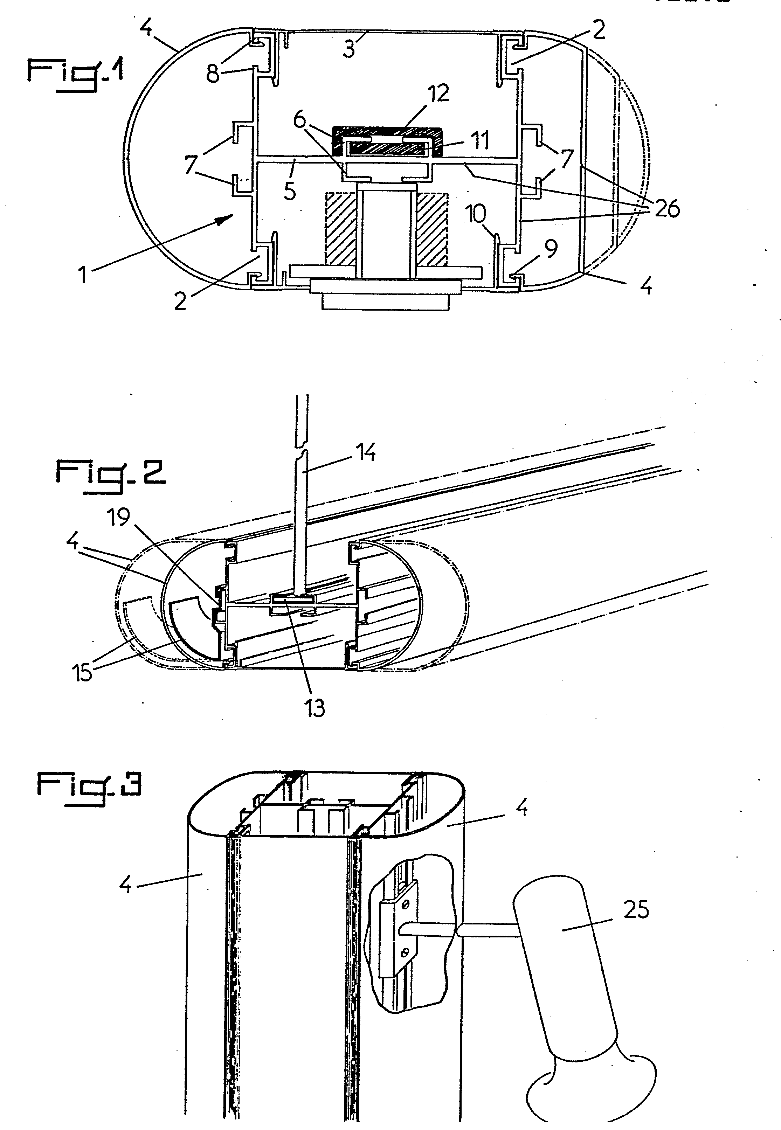

Conformément à l'invention, et comme le montre plus particulièrement, à titre d'exemple, la figure 1 des dessins annexés, la goulotte de distribution universelle est essentiellement constituée par un élément profilé extrudé 1 présentant une section en H dont les extrémités des ailes sont pourvues de moyens 2 de fixation par encliquetage de couvercles 3, correspondant aux faces de la goulotte, et de couvercles 4, correspondant aux côtés de la goulotte, ces couvercles 4 étant avantageusement des couvercles interchangeables à section évolutive, de forme et section quelconques (figures 1 et 2). En outre, l'âme 5 de l'élément 1 est munie sur ses deux faces de crans longitudinaux 6 de fixation ou d'accrochage d'éléments de séparation, de suspension, ou autres, et chaque aile est pourvue extérieurement, au niveau de l'âme 5, de crans longitudinaux 7 de fixation ou d'accrochage d'éléments de séparation ou pour la fixation de dispositifs en saillie sur les côtés de la goulotte.

La goulotte conforme à l'invention permet de délimiter au moins quatre volumes distincts pour effectuer, par exemple, la distribution de quatre sortes de câbles différents, à savoir, le téléphone, l'informatique, les prises de courant, et les câbles de sécurité, etc...

Les moyens 2 sont avantageusement sous forme de rainures longitudinales parallélépipédiques dont l'ouverture est munie de rebords 8 destinés à coopérer avec des crans ou bourrelets d'accrochage 9 des couvercles 4, ces rainures étant décalées vers l'intérieur du profil en H de l'élément 1, de sorte que leur bord interne peut coopérer avec des crans ou bourrelets d'accrochage 10 des couvercles 3.

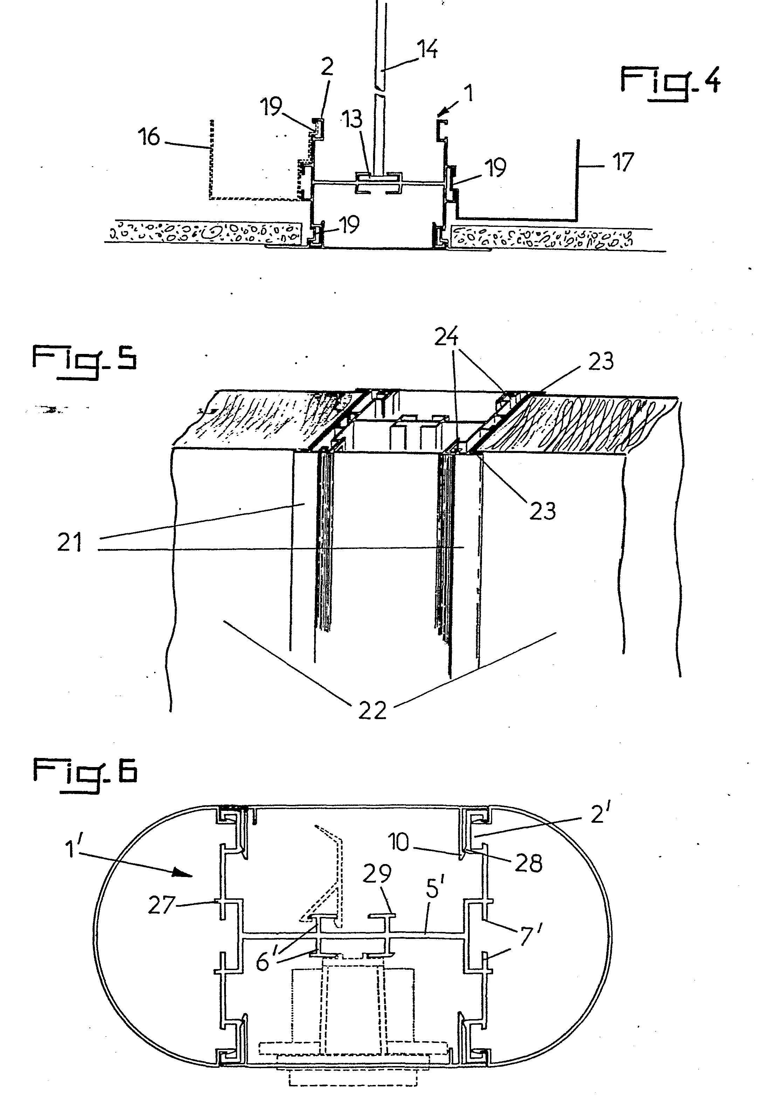

Les crans 6 et 7, affectés à chaque face de l'âme 5 et aux côtés extérieurs des ailes du profil en H de l'élément 1, sont, de préférence, sous forme de cornières longitudinales disposées par paire et opposées de manière à délimiter des rainures de guidage, soit pour la plaquette de pincement 11 d'un élément de fixation à cavalier 12 (figures 1 et 3), soit pour un élément horizontal 13 d'un support en té 14 engagé à coulissement dans la rainure (figures 2 et 4).

Selon une autre caractéristique de l'invention, dans le cas d'utilisation de la goulotte en position horizontale, et pour le support d'un ou de plusieurs types de produits sur chaque côté de la goulotte, cette dernière peut être munie de guides ou de supports 15 à 18, de section adaptée à la section intérieure des couvercles 4 (figure 2) ou aux types de produits à guider ou à supporter (figure 4), et dont un bord est muni d'un profilé d'accrochage 19 sous forme d'un décrochement pénétrant dans la rainure formée par les crans 7 ou par les rainures longitudinales des moyens 2.

Ainsi, la figure 2 montre un guide ou support 15 à section en quart de rond muni d'un décrochement 19 pénétrant dans la rainure formée par les crans 7 (en trait épais dans la figure 2). Dans cette figure 2 sont également représentées des variantes de réalisation des couvercles 4 et du support 15 (en traits mixtes fins et en pointillé). La goulotte représentée dans cette figure est une goulotte de type suspendu à un plafond au moyen de supports 14.

La figure 4 représente d'autres variantes de réalisation de guides ou supports 16 à 18, soit sous forme de chemins de câbles 16 et 17, soit encore sous forme de profilés 18 de support d'éléments de plafond suspendu 20, ces guides ou supports 16 à 18 pouvant être utilisés en combinaison pour la formation d'un plafond suspendu avec distribution simultanée des branchements de divers circuits.

Conformément à une autre caractéristique de l'invention, pour l'utilisation comme poteau de paroi de séparation (figure 5), la goulotte est munie de chaque côté d'un profilé 21 de guidage d'un côté de panneau de paroi 22 pourvu de deux ailes 23 d'enserrement dudit côté et de deux éléments 24 d'encliquetage élastique dans les rainures des moyens 2 de l'élément extrudé 1. Dans la figure 5, la goulotte est représentée en position verticale, mais son utilisation en position horizontale comme liaison de panneaux de parois ou en combinaison avec des goulottes horizontales pour la réalisation de parois est également possible. Un tel mode de réalisation permet notamment une distribution simultanée de circuits électriques, informatiques, ou autres, des deux côtés d'une paroi, sans prévision d'installations complémentaires.

La figure 3 représente une utilisation de la goulotte conforme à l'invention, en colonne avec prévision de montage, sur un côté, d'un élément 25 en saillie hors du couvercle 4 correspondant. Un tel montage est possible par montage préalable du support de l'élément 25 sur les crans 7 correspondants et perçage d'un trou de passage dans ledit couvercle 4, puis par montage de l'élément 25 sur son support après mise en place du couvercle 4. Un tel montage de la goulotte permet, en outre, une possibilité de distribution sur la totalité de sa surface externe.

L'élément 1 et les couvercles 3 et 4 sont pourvus, en outre, de manière connue, de lignes de trusquinage 26

- 5 -

0232212

sous forme d'affaiblissements en V, notamment pour un positionnement aisé d'un perçage.

La figure 6 représente une variante de réalisation de l'invention, dans laquelle les crans 7' des côtés de l'élément 1' à section en H sont réalisés sous forme d'une rainure alignée avec les rainures formant les moyens 2' en retrait par rapport aux ailes de l'élément 1', ces crans 7' étant munis, en outre, de nervures longitudinales 27 décalées par rapport aux bords des crans 7', parallèles à ces derniers et formant des arrêts, le bord interne des rainures 2' étant muni d'un bourrelet 28 destiné à coopérer avec les bourrelets 10 des couvercles 3, et les crans 6' de l'âme 5 formant des rainures de guidage sont pourvus, du côté opposé à l'ouverture des rainures, d'un rebord 29 en saillie parallèlement à ladite âme 5', et les bords de ces rebords 29 ainsi que des crans 6' peuvent être sous forme d'un plan incliné arrondi, ou être munis d'un chanfrein pour la fixation aisée de tous éléments de séparation.

Grâce à l'invention, il est possible de réaliser une distribution de circuits électriques, informatiques, de sécurité, ou autres, évolutive en fonction des besoins, tout en assurant, le cas échéant, des fonctions annexes, telles que de support ou de cloisonnement. En outre, la goulotte conforme à l'invention permet d'assurer un aspect esthétique irréprochable. En effet, l'élément 1 ou 1' peut être mis en place sur le chantier sous les couvercles de manière à éviter leur détérioration pendant les travaux, les couvercles n'étant posés qu'à la fin des travaux.

Bien entendu, l'invention n'est pas limitée au mode de réalisation décrit et représenté aux dessins annexés. Des modifications restent possibles, notamment du point de vue de la constitution des divers éléments, ou par substitution d'équivalents techniques, sans sortir pour autant du domaine de protection de l'invention.

- R E V E N D I C A T I O N S -

1. Goulotte de distribution caractérisée en ce qu'elle est universelle, et en ce qu'elle est essentiellement constituée par un élément profilé extrudé (1) à section en H, dont les extrémités des ailes sont pourvues de moyens (2) de fixation par encliquetage de couvercles (3) de faces et de couvercles interchangeables à section évolutive de forme et section quelconques (4) de côtés, dont l'âme (5) est munie sur ses deux faces de crans longitudinaux (6) de fixation ou d'accrochage d'éléments de séparation, de suspension, ou autres, et dont chaque aile est pourvue extérieurement, au niveau de l'âme (5), de crans longitudinaux (7) de fixation ou d'accrochage d'éléments de séparation ou pour la fixation de dispositifs en saillie sur les côtés de la goulotte.

2. Goulotte, suivant la revendication 1, caractérisée en ce que les moyens (2) sont avantageusement sous forme de rainures longitudinales parallélépipédiques dont l'ouverture est munie de rebords (8) destinés à coopérer avec des crans ou bourrelets d'accrochage (9) des couvercles (4), ces rainures étant décalées vers l'intérieur du profil en H de l'élément (1), de sorte que leur bord interne peut coopérer avec des crans ou bourrelets d'accrochage (10) des couvercles (3).

3. Goulotte, suivant la revendication 1, caractérisée en ce que les crans (6 et 7), affectés à chaque face de l'âme (5) et aux côtés extérieurs des ailes du profil en H de l'élément (1), sont, de préférence, sous forme de cornières longitudinales disposées par paire et opposées de manière à délimiter des rainures de guidage, soit pour la plaquette de pincement (11) d'un élément de fixation à cavalier (12), soit pour un élément horizontal (13) d'un support en té (14) engagé à coulissement dans la rainure.

4. Goulotte, suivant l'une quelconque des revendications 1 à 3, caractérisée en ce que dans le cas d'utilisation de la goulotte en position horizontale, et pour le support d'un ou de plusieurs types de produits sur chaque côté de la goulotte, cette dernière peut être munie de guides ou de supports (15 à 18), de section adaptée à la section intérieure des couvercles (4) ou aux types de produits à guider ou à supporter, et dont un bord est muni d'un profilé d'accrochage (19) sous forme d'un décrochement pénétrant dans la rainure formée par les crans (7) ou par les rainures longitudinales des moyens (2).

5. Goulotte, suivant l'une quelconque des revendications 1 à 3, caractérisée en ce que pour l'utilisation comme poteau de paroi de séparation, la goulotte est munie de chaque côté d'un profilé (21) de guidage d'un côté de panneau de paroi (22) pourvu de deux ailes (23) d'enserrement dudit côté et de deux éléments (24) d'encliquetage élastique, dans les rainures des moyens (2) de l'élément extrudé (1).

6. Goulotte, suivant la revendication 1, caractérisée en ce que les crans (7') des côtés de l'élément (1') à section en H sont réalisés sous forme d'une rainure alignée avec les rainures formant les moyens (2') en retrait par rapport aux ailes de l'élément (1'), ces crans (7') étant munis, en outre, de nervures longitudinales (27) décalées par rapport aux bords des crans (7'), parallèles à ces derniers formant des arrêts, le bord interne des rainures (2') étant muni d'un bourrelet (28) destiné à coopérer avec les bourrelets (10) des couvercles (3), et les crans (6') de l'âme (5) formant des rainures de guidage sont pourvus, du côté opposé à l'ouverture des rainures, d'un rebord (29) en saillie parallèlement à ladite âme (5'), et les bords de ces rebords (29) ainsi que des crans (6') peuvent être sous forme d'un plan incliné, arrondie, ou être munis d'un chanfrein pour la fixation aisée de tous éléments de séparation.

0232212

**Fig.1**

**Fig.2**

**Fig.3**

Fig.4

Fig.5

Fig.6

Office européen
des brevets

**RAPPORT DE RECHERCHE EUROPEENNE**

Numéro de la demande

EP 87 44 0001

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | DE-A-2 359 361 (LINAC) <br> * Page 6, dernier alinéa; page 7, alinéa 1; page 8, alinéas 2,3; page 17, alinéa 1; figures 2-6 * | 1,5,6 | H 02 G 3/04 |
| Y | | 2-4 | |
| | --- | | |
| Y | US-A-3 609 211 (VAN HERK) <br> * Colonne 1, lignes 50-66; colonne 3, lignes 46-57; figures 2,3 * | 2 | |
| | --- | | |
| Y | FR-A-2 051 414 (SCHIFFERLE) <br> * Page 7, lignes 1-14; figure 1 * | 3 | |
| | --- | | |
| Y | BE-A- 809 277 (WIDELL et al.) <br> * Page 3, alinea 2; figure 1 * | 4 | DOMAINES TECHNIQUES RECHERCHES (Int. Cl.4) |
| | --- | | |
| A | FR-A-2 177 619 (ETUDES ET CREATIONS D'AMBIANCES) <br> * Page 1, ligne 35 - page 2, ligne 15; figures 4,5 * | 1-3,5 | H 02 G 3/00 |
| | ----- | | |

Le présent rapport de recherche a été établi pour toutes les revendications

| Lieu de la recherche <br> LA HAYE | Date d'achèvement de la recherche <br> 23-04-1987 | Examinateur <br> TIELEMANS H.L.A. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503. 03.82